(19) Europäisches Patentamt
European Patent Office
Office européen des brevets

(11) Publication number: **0 279 207 B1**

(12) # EUROPEAN PATENT SPECIFICATION

(45) Date of publication of patent specification: **15.06.94**

(51) Int. Cl.5: **A01N 57/16**, A01N 57/32, A01N 25/22

(21) Application number: **88100876.7**

(22) Date of filing: **21.01.88**

(54) **Composition and method of stabilizing o-halopyridylphosphates.**

(30) Priority: **17.02.87 US 15769**

(43) Date of publication of application:
**24.08.88 Bulletin 88/34**

(45) Publication of the grant of the patent:
**15.06.94 Bulletin 94/24**

(84) Designated Contracting States:
**BE DE ES FR GB IT NL SE**

(56) References cited:
**CH-A- 274 737**
**DE-A- 2 655 398**
**FR-A- 1 439 896**
**US-A- 4 213 975**

(73) Proprietor: **DOWELANCO**
**9002 Purdue Road**
**Indianapolis, Indiana 46268-3030(US)**

(72) Inventor: **Van Horn, Roy L.**
**5400 S.M-30**
**Beaverton Michigan 48612(US)**

(74) Representative: **Huber, Bernhard, Dipl.-Chem. et al**
**Patentanwälte**
**H. Weickmann, Dr. K. Fincke**
**F.A. Weickmann, B. Huber**
**Dr. H. Liska, Dr. J. Prechtel, Dr. B. Böhm**
**Postfach 86 08 20**
**D-81635 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

## Description

This invention relates to a novel composition and method for stabilizing O-pyridyl phosphate insecticides.

U.S. patent 4,213,975 discloses an insecticidal composition wherein the active substance is applied in admixture with an inert carrier material which may be inter alia kieselguhr, diatomaceous earth, lime, talc, wood flour etc. DE-OS- 26 55 398 also describes a carrier material for biologically active substances including kieselguhr or wood flour. However, there is a serious drawback in using materials as diatomaceous earth or kaolinite clay as carrier materials. Although they are highly desirable as carrier materials because of their structure, they tend to degrade and inactivate the insecticidal component of such insecticidal composition including them.

It was an object of the present invention to avoid these problems of the state of the art.

More particularly, the invention provides a composition comprising:

a) from 0.5 to 95 weight percent of an O-halopyridylphosphate insecticide of the formula:

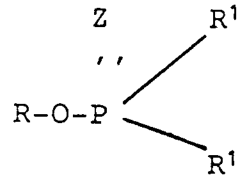

wherein R represents halopyridyl, Z represents oxygen or sulfur, and each $R^1$ represents lower alkoxy, amino or loweralkylamino, wherein said insecticide is admixed with an amount effective to thermally stabilize the insecticide of

b) from 5 to 99.5 weight percent of an inert carrier which is a mixture of wood flour and a diatomaceous earth, or a mixture of wood flour and a kaolinite clay and

c) wherein the wood flour is present in an amount of from 1 to 20 parts to one part of the diatomaceous earth or kaolinite clay.

The invention is also directed to a method for protecting stored grains and plants from insect damage by utilizing the compositions. Most preferably the wood flour is a softwood flour.

In this application, the terms "powder", whether high or low concentrate, and "compositions" are used interchangeably and have the same meaning.

The terms "loweralkoxy" and "loweralkylamino" refer to alkoxy and alkylamino groups having from 1 to 4 carbon atoms.

The preferred insecticide is "chlorpyrifos-methyl" which is O,O-dimethyl O-(3,5,6-trichloro-2-pyridyl)-phosphorothioate.

The O-halopyridylphosphate insecticide can be admixed with the desired carrier to make either high concentrate powders or low concentrate powders. Low concentrate powders are those which can be directly applied to control unwanted pests, i.e., those in stored grain or in storage facilities such as silos and storage bins without further preparation or dilution. High concentrate powders are those which can be admixed with additional carrier to prepare low concentrate powders. The concentration of the O-halopyridylphosphate in high concentrate powders can range from 10 to 95 percent (weight basis) or more, preferably from 30 to 90 percent, more preferably between 30 and 50 percent by weight insecticide. High concentrate powders can be admixed with additional carrier to prepare low concentrate powders. The concentrations of the O-halopyridylphosphate insecticide in low-concentrate powders can range from 0.5 to 10 percent (weight basis), preferably from 1 to 5 percent, most preferably 2 to 3 percent by weight insecticide.

The term "wood flour" includes pulverized hard woods, softwoods and mixtures thereof. Wood flour is graded according to color and fineness. The particle size of the wood flour can range from 2400 microns to 2 microns.

The term "softwocd flour" includes pulverized dried wood flour from softwood wastes or from softwood manufacturing processes.

The term "hardwood flour" includes pulverized dried wood flour from hardwood wastes or from hardwood manufacturing processes.

"Diatomaceous earth" refers to soft, bulky solid material (about 88 percent or more silica) composed of skeletons of small prehistoric aquatic plants related to algae (diatoms).

"Barden Clay" is a kaolinite clay having an average chemical analysis of about 45 percent silicon dioxide ($SiO_2$) and 38 percent aluminum oxide ($Al_2O_3$).

The wood flour employed in the present method or composition should be an amount effective to stabilize the O-halopyridylphosphate insecticide from thermal degradation. In high concentrate powders, the wood flour can comprise between 5 to 89 percent by weight of the total composition, preferably from 30 to 70 percent by weight, more preferably 50 to 70 percent by weight. In low concentrate powders, the wood flour can comprise between 90 to 99.5 percent by weight of the composition, more preferably from 95 to 99 percent, most preferably 97 to 98 percent by weight of the total composition.

In the carrier which is a mixture of wood flour and a mineral carrier such as a diatomaceous earth or a kaolinite clay, the wood flour should be an amount effective to thermally stabilize the insecticide. Generally the wood flour can be combined with the mineral carrier in a ratio ranging from 20 to 1 part wood flour to one part mineral carrier (weight basis), preferably from 10 parts to 1 part wood flour to one part mineral carrier, most preferably from 4 to 1.5 parts wood flour to one part mineral carrier.

According to the invention, where the carrier is wood flour admixed with a mineral carrier such as kaolinite clay or a diatomacsous earth, the composition of the present invention can be prepared by admixing all components together, in addition to any further addition of a wetting agent and/or dispersing agent. Preferably, the insecticide is uniformly admixed with the wood flour and the mineral carrier is added to the wood flour admixed with insecticide.

The compositions of the present invention can be prepared by uniformly applying the O-halopyridylphosphate insecticide to the desired carrier to give the requisite insecticidal concentration in the compositions. Generally, the O-halopyridylphosphate insecticide is sprayed onto the carrier, and the mixture of the insecticide and the carrier can be agitated until the insecticide is absorbed onto the carrier. The mixture can be ground to give a particular size ranging from 50 microns to 2400 microns, preferably about 50 microns.

In situations where the composition of the present invention are employed as wettable powders, the composition can be ground to a even finer particle size, which can range from 1 to 30 microns. Wetting agents are added to the finely ground powder to improve its wettability when the powder is added to an aqueous medium. Such wetting agents include, but are not limited to, alkylnapthalene sulfonate salts and N-methyl-N-oleoyltaurate salts such as sodium, potassium or ammonium. Dispersing agents can be combined with the wetting agent to improve the dispersion of the powder when added to an aqueous medium. Typical dispersing agents include the sodium based sulfonates of lignin and the salts of polymerized alkylnaphalene sulfonic acids. Typically, the wetting and dispersing agents can comprise between 3 to 10 percent (weight basis) of the total insecticidal composition. The wetting and dispersing agents can be combined with the insecticidal composition on its individual components acccording to any known methods.

Low concentrate powders of the present invention can be used in stored grain for protection of barley, oats, rice, sorghum and wheat against injury from stored grain weevils, moths, borers, beetles and mealworms including granary weevil, rice weevil, red flour beetle, confused flour beetle, saw-toothed grain beetle, Indian meal moth, Angoumois grain moth and lesser grain borer. The low concentrate powders can be applied to the grain at the rate of 0.128 to 0.64 $kg/m^3$, preferably 0.128 kg powder per $m^3$ as the grain is being loaded or turned into final storage. To protect stored grains from attack by Indian meal moth, the powder can be applied to the surface of clean or infested grain at the rate of about 0.034 $kg/m^2$ grain surface area.

The powder can be applied to the grain as evenly as possible, by any suitable means, such as sprinkling, blowing, laying, etc.

The low concentrate powders can be applied to grain in a truck or wagon prior to binning. The desired amount of the low concentrate powder is spread evenly over the surface of the grain in the truck or wagon. The powder can be mixed into the grain with any suitable utensil, such as a shovel. The powder becomes mixed with the grain as it is dumped from the truck or wagon into the hopper. Further mixing occurs when the grain is augered or blown into the bin. Mixing is completed as the powder and grain roll down the cone shaped pile in the bin.

High concentrate powders (10 to 90 percent by weight insecticide) can be admixed with additional carrier to prepare the low concentrate powders discussed above.

Plants or plant parts can also be contacted with the compositions of the present invention in order to control insects such as crickets or grasshoppers. Such plants typically include vegetables such as tomatoes, cabbage, broccoli, lettuce or watermelons or field crops such as corn, soybeans, cotton, potatoes, wheat or rice. The composition of the present invention can also be applied to non-crop plants in areas such as railroad right of ways. Sticker agents, which help the compositions to adhere more tightly to the grain or plant parts, can be added to the present compositions. Such sticker agents include, but are not limited to, paraffinic oils, mineral oils such as white mineral oils, free and combined fatty acids, alkylarylpolyethoxyethanol, glycol ethers and di-alkylbenzene dicarboxylates.

Typically, the sticker agents can comprise from 3 to 10 weight percent of the total insecticidal composition. Such sticker agents can be combined with the insecticidal composition or its individual components according to any known methods.

The following examples further illustrate the present invention. All parts are by weight unless otherwise specified.

Example 1 - Thermal Stability of Chlorpyrifos-methyl in Low Concentrate Powders

Fifteen grams (g) of a liquid insecticidal concentrate containing 60.6 percent (weight basis) chlorpyrifos-methyl and 39.4 percent aromatic solvents were sprayed directly onto 285 g of various selected carriers to give prepared mixture calculated to contain more than 0,5 and less than 4 percent chlorpyrifos-methyl. The mixture was agitated on a rotating drum mixer for 10 minutes to ensure complete absorption of chlorpyrifos-methyl onto the carrier. The mixtures were then ground on a hammermill to give a uniform particle size of a nominal 50 mesh (297 microns). The ground samples were placed in a temperature controlled oven and heated to a temperature of 50 degrees Centigrade (°C) for a period of 60 and 90 days. A portion of the samples were analyzed for determining the amount of chlorpyrifos-methyl initially present (i.e., 0 days).

The percentages of chlorpyrifos-methyl remaining in the samples are presented in Table 1.

**Table 1**

Thermal Stability of Chlorpyrifos-methyl at 50°C (122°F) in Low Concentrate Dust Powders Containing more than 0,5 and Less than 4 percent Chlorpyrifos-methyl

| | Carrier | Carrier and Solvent as Percent (%) of Formulation | Chlorpyrifos Methyl as Percent of Formulation | Percent Chlorpyrifos-methyl Remaining | | |
|---|---|---|---|---|---|---|
| | | | | 0 Days | 60 Days | 90 Days |
| * | Softwood Flour | 96.40 | 3.60 | 100.0 | 100.0 | 94.8 |
| * | Hemicellulose Extract (Dried) | 96.69 | 3.31 | 100.0 | 94.6 | 85.5 |
| ** | Softwood Flour (76%) + Diatomaceous Earth (19%) | 96.99 | 3.01 | 100.0 | 100.0 | 100.0 |
| ** | Softwood Flour (76%) + Kaolinite Clay (19%) | 96.39 | 3.61 | 100.0 | 100.0 | 90.3 |

The composition of the present invention can also be employed in non-crop areas (non-plant) such as households and industrial buildings including but not limited to restaurants, apartments, office buildings, warehouses and factories. Either high or low concentration powders with or without wetting agents, dispersing agents, sticking agents or mixtures thereof can be employed in such applications.

* Comparative Examples
** Compositions according to the invention

Example 2 - Thermal Stability of Chlorpyrifos in High Concentrate Powders

Essentially the same procedure was practiced as described in Example 1 except that molten concentrates of chlorpyrifos-methyl were employed in preparing the powders. Molten concentrates of chlorpyrifos-methyl heated to a temperature of 50°C were sprayed onto a preheated softwood carrier in a rotating blender to give chlorpyrifos-methyl concentrations ranging between 30 to 50 percent of the total composition. The percentages of chlorpyrifos-methyl remaining in the samples are presented in Table 2.

Table 2

Thermal Stability of Chlorpyrifos-methyl at 50°C (122°F) in High Concentrate Powders Containing from 30-50 Percent Chlorpyrifos-methyl

| Carrier | Carrier as Percent of Composition | Chlorpyrifos-methyl as Percent of Composition | Percent Chlorpyrifos-methyl Remaining After | |
|---|---|---|---|---|
| | | | 0 Days | 60 Days |
| Softwood Flour | 58.2 | 41.8 | 100.0 | 90.3 |

## Claims

**1.** A composition comprising:

a) from 0.5 to 95 weight percent of an O-halopyridylphosphate insecticide of the formula:

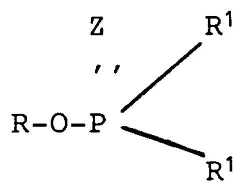

wherein R represents halopyridyl, Z represents oxygen or sulfur, and each $R^1$ represents lower alkoxy, amino or loweralkylamino, wherein said insecticide is admixed with an amount effective to thermally stabilize the insecticide of

b) from 5 to 99.5 weight percent of an inert carrier which is a mixture of wood flour and a diatomaceous earth, or a mixture of wood flour and a kaolinite clay and

c) wherein the wood flour is present in an amount of from 1 to 20 parts to one part of the diatomaceous earth or kaolinite clay.

**2.** The composition of claim 1 wherein the O-halopyridylphosphate insecticide is chlorpyrifos-methyl.

**3.** The composition of claim 1 wherein the concentration of O-halopyridylphosphate insecticide in the composition is in the range from 3.01 to 3.61 percent and the carrier concentration is from 96,39 to 96,99 percent by weight.

**4.** The composition of claim 1 wherein the concentration of O-halopyridylphosphate insecticide in the composition is 41.8 percent and the carrier concentration is 58.2 percent by weight.

**5.** The composition of any one of claims 1 to 4 wherein the wood flour is a softwood flour.

**6.** The composition of any one of claims 1 to 4 wherein the carrier is a mixture of a softwood flour and a diatomaceous earth.

**7.** The composition of any one of claims 1 to 4 wherein the carrier is a mixture of a softwood flour and a kaolinite clay.

**8.** The composition of any one of claims 1 to 7 further comprising a wetting agent, a dispersing agent, a sticker agent or mixtures thereof.

**9.** A method for protecting stored grain or non-crop areas or plants from insect-damage comprising applying to the locus of the grain or plants the composition of any one of claims 1 to 8.

**Patentansprüche**

**1.** Zusammensetzung, umfassend:

a) von 0,5 bis 95 Gew.-% eines O-HalopyridylphosphatInsektizids der Formel:

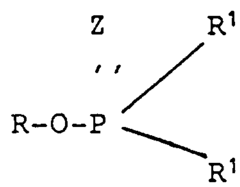

worin R Halopyridyl bedeutet, Z Sauerstoff oder Schwefel bedeutet, und jedes $R^1$ niederes Alkoxy,

Amine oder niederes Alkylamino bedeutet, worin das Insektizid vermischt ist mit einer zur thermischen Stabilisierung des Insektizids wirksamen Menge von
b) 5 bis 99,5 Gew.-% eines inerten Trägers, der eine Mischung von Holzmehl und einer Diatomeenerde oder eine Mischung von Holzmehl und einem Kaolinitton ist und
c) worin das Holzmehl in einer Menge von 1 bis 20 Teilen auf einen Teil der Diatomeenerde oder des Kaolinittons vorhanden ist.

2. Zusammensetzung nach Anspruch 1, worin das O-Halopyridylphosphat-Insektizid Chlorpyrifos-Methyl ist.

3. Zusammensetzung nach Anspruch 1, worin die Konzentration von O-Halopyridylphosphat-Insektizid in der Zusammensetzung im Bereich von 3,01 bis 3,61 Prozent und die Trägerkonzentration von 96,39 bis 96,99 Prozent auf Gewichtsbasis ist.

4. Zusammensetzung nach Anspruch 1, worin die Konzentration von O-Halopyridylphosphat-Insektizid in der Zusammensetzung 41,8 Prozent und die Trägerkonzentration 58,2 Prozent auf Gewichtsbasis ist.

5. Zusammensetzung nach einem der Ansprüche 1 bis 4, worin das Holzmehl ein Weichholzmehl ist.

6. Zusammensetzung nach einem der Ansprüche 1 bis 4, worin der Träger eine Mischung aus einem Weichholzmehl und einer Diatomeenerde ist.

7. Zusammensetzung nach einem der Ansprüche 1 bis 4, worin der Träger eine Mischung aus einem Weichholzmehl und einem Kaolinitton ist.

8. Zusammensetzung nach einem der Ansprüche 1 bis 7, die weiterhin ein Netzmittel, ein Dispergiermittel, ein Haftmittel oder Mischungen davon enthält.

9. Verfahren zum Schützen von gelagerten Körnern oder getreidefreien Bereichen oder Pflanzen vor Insektenschäden, umfassend das Aufbringen der Zusammensetzung nach einem der Ansprüche 1 bis 8 auf den Ort der Körner oder der Pflanzen.

**Revendications**

1. Composition comportant:
a) de 0,5 à 95 pour-cent en poids d'un insecticide à base de phosphate de O-halopyridyle de la formule:

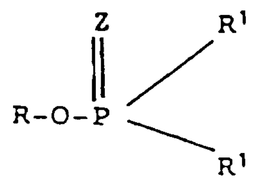

où R représente l'halopyridyle, Z représente l'oxygène ou le soufre et chaque $R^1$ représente un groupe alcoxy d'ordre inférieur, amino ou alkylamino d'ordre inférieur, étant précisé que l'on mélange audit insecticide une proportion efficace pour stabiliser thermiquement l'insecticide,
b) de 5 à 99,5 pour-cent en poids d'un support inerte qui est un mélange de farine de bois et de terre de diatomées, ou un mélange de farine de bois et d'argile de kaolinite, et
c) ladite farine de bois étant présente dans une proportion de 1 à 20 parties pour une partie de terre de diatomées ou d'argile de kaolinite.

2. Composition selon la revendication 1 dans laquelle l'insecticide à base de phosphate de O-halopyridyle est le chlorpyrisfosméthyle.

**3.** Composition selon la revendication 1, dans laquelle la concentration de l'insecticide à base de phosphate de O-halopyridyle dans la composition va de 3,06 à 3,61 pourcent et la concentration du support va de 96,39 à 96,99 pourcent en poids.

**4.** Composition selon la revendication 1, dans laquelle la concentration de l'insecticide à base de phosphate de O-halopyridyle dans la composition est de 41,8 pour-cent et la concentration du support est de 58,2 pour-cent en poids.

**5.** Composition selon l'une des revendications 1 à 4, dans laquelle la farine de bois est une farine de bois tendre.

**6.** Composition selon l'une des revendications 1 à 4, dans laquelle le support est un mélange de farine de bois tendre et de terre de diatomées.

**7.** Composition selon l'une des revendications 1 à 4, dans laquelle le support est un mélange de farine de bois tendre et d'argile de kaolinite.

**8.** Composition selon l'une des revendications 1 à 7 comportant en outre un agent mouillant, un agent dispersant, un agent d'adhérence ou leurs mélanges.

**9.** Procédé de protection du grain stocké ou de zones non récoltées ou de plantes à l'égard des dommages provoqués par les insectes, consistant à appliquer à l'endroit où se trouvent le grain ou les plantes, une composition selon l'une des revendications 1 à 8.